# EUROPEAN PATENT SPECIFICATION

(11) **EP 2 427 952 B1**
(45) Date of publication and mention of the grant of the patent: **27.04.2016**
(21) Application number: 10723500.4
(22) Date of filing: 06.05.2010
(51) Int. Cl.: H02K 7/08

(54) **ELECTROMOTIVE AUXILIARY DRIVE FOR VEHICLES**
ELEKTROMOTORISCHER HILFSANTRIEB FÜR FAHRZEUGE
ENTRAÎNEMENT AUXILIAIRE ÉLECTROMOTEUR POUR VÉHICULES

(30) Priority: 07.05.2009 DE 102009020283
(43) Date of publication of application: 14.03.2012
(73) Proprietor: VALEO SYSTEMES D'ESSUYAGE, 78321 La Verrière (FR)
(72) Inventor: STEFANI, Siegfried, 71739 Oberriexingen (DE); HEUBERGER, Christof, D-71691 Freiberg (DE); HARTMANN, Werner, 71665 Vaihingen/Enz (DE)
(86) International application number: PCT/EP2010/002776
(87) International publication number: WO 2010/127852

(56) References cited:
- DE-A1- 2 715 770
- DE-A1- 4 123 785
- DE-A1- 19 854 535
- JP-A- 10 313 548
- JP-A- 2007 181 325
- JP-A- 2007 202 359
- US-B1- 6 474 873

## Description

The invention relates to an electromotive auxiliary drive for vehicles according to the preamble of Patent Claim 1.

Electromotive auxiliary drives for vehicles are known in different versions and for different purposes, such as a wiper drive or drive or as an actuator for the electrical adjustment of vehicle seats, for the opening and closing of car windows, etc.

Electromotive auxiliary drives of this type often comprise of an electric motor and a gearbox associated with this engine, which e.g. is designed as a worm gear. Even with such auxiliary drives, a fundamental problem is the axial clearance of the motor or armature shaft in particular, which or whose extension is usually also the driven shaft of the gearbox. This bearing play leads inter alia, to increased noise levels and increased wear and tear with a possible premature failure or defect of the drive, and in particular, also in reversing wiper drives or motors, i.e. in drives, whose output shaft rotates alternately in one direction and in the opposite direction while in drive.

An axial clearance compensation device (DE 198 54 535 A1) was proposed for the automatic axial clearance compensation in an electromotive auxiliary drive, which essentially consists of a radially arranged emerging part that is displaceable with respect to the shaft and is designed as a wedge, which axially operates on the shaft with one side over a bearing, and rests on an opposite side with a wedge surface at an angle to the axis of the shaft oriented housing side mating surface. The starting-up element is pre-stressed using a spring in an axial direction radial to the shaft, so that the spring force on the angular or wedge surface of the starting-up part interacting with the angular housing side mating surface is converted into an axial force compensating the axial clearance and acting on the shaft. A disadvantage of this known axial clearance compensation device is among others, its relatively large design volume as well as the fact that it requires a special design for the housing and hence cannot be included in the existing and approved designs for electromotive auxiliary drives and/or their housings.

There are other electrical machinery or drives (DE4123785 A1, DE2715770 A1), in which the axial clearance compensation is due to the fact that the motor shaft is supported axially on a shaft end on a bearing, which produces an axial force on the shaft generated by a spring and compensates the axial clearance.

Document JP2007202359 describes an electromotive auxiliary drive for vehicles with one rotating shaft mounted in a housing, an axial compensation device in the form of screw is designed in order to compensate the axial play between the housing and the shaft. The screw applies an axial force on the shaft end through a cushion member.

Document JP10313548 describes an electromotive auxiliary drive for vehicles with one rotating shaft mounted in a housing, including at least one screw acting on a bearing for compensating axial clearance. Locking of this compensating device is ensured by a lock nut.

Document DE4123785 describes an electromotive auxiliary drive for vehicles with one rotating shaft mounted in a housing, an axial compensation device is designed and the force is applied to the end of the rotating shaft.

The purpose of the invention is to provide an electromotive auxiliary drive with an axial clearance compensation device that is characterised in particular by a compact design for axial clearance compensation, which remains effective throughout the life of the auxiliary drive and effectively prevents axial clearance of that particular shaft.

An electromotive auxiliary drive corresponding to the patent claim 1 is designed to achieve this purpose.

In a preferred embodiment of the invention, the starting-up part interacts with a bearing of the shaft that is axially secured on the shaft, in the housing of the auxiliary drive but is axially sliding. The locking means is, for example, made of at least one catch on the starting-up part or on the housing, which interacts with a mating catch or catch on the housing or on the starting-up part, or with a surface on the housing or starting-up part and in fact, for example, in the latter case so that at least one catch presses onto the surface or claws into the surface and thereby prevents turning back or swivelling of the starting-up part from the axial clearance compensating position.

While designing the auxiliary drive with a motor located in the motor housing and a gearbox with a gear housing, the axial clearance compensation device is preferably placed at the transition between the motor housing and the gearbox housing, and in such a way that the starting-up element for the axial clearance compensation is accessible from the still open gearbox housing.

Advanced training, benefits and applications of the invention can be deduced from the following description of embodiments and from the figures. Here, all the features described and/or illustrated for itself or in any combination are basic subject matters of the invention, regardless of the omnibus claims or the retroactive application thereof. The content of the claims is also a part of the description.

The invention is described in greater detail on the basis of the figures of the embodiments. The drawings show:

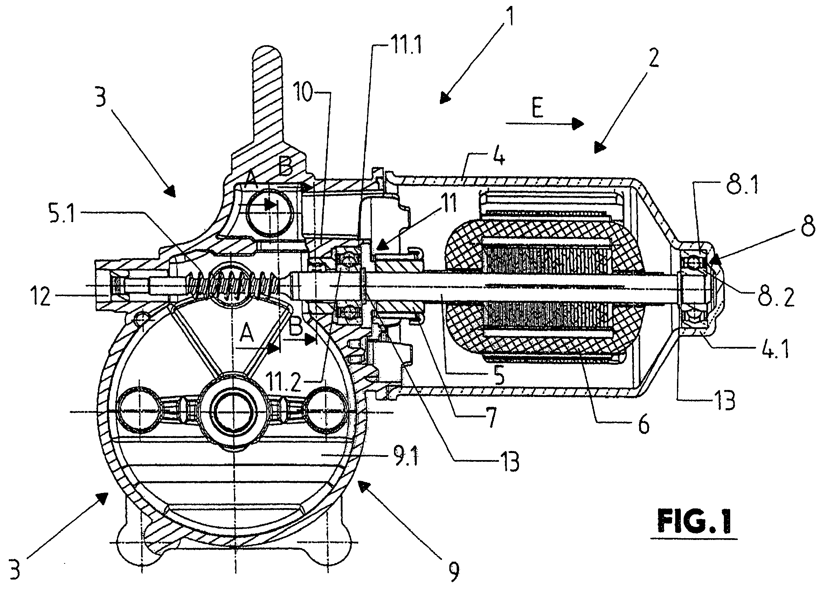

- Fig. 1: shows a simplified representation and a sectional view of an electromotive auxiliary drive according to the invention;

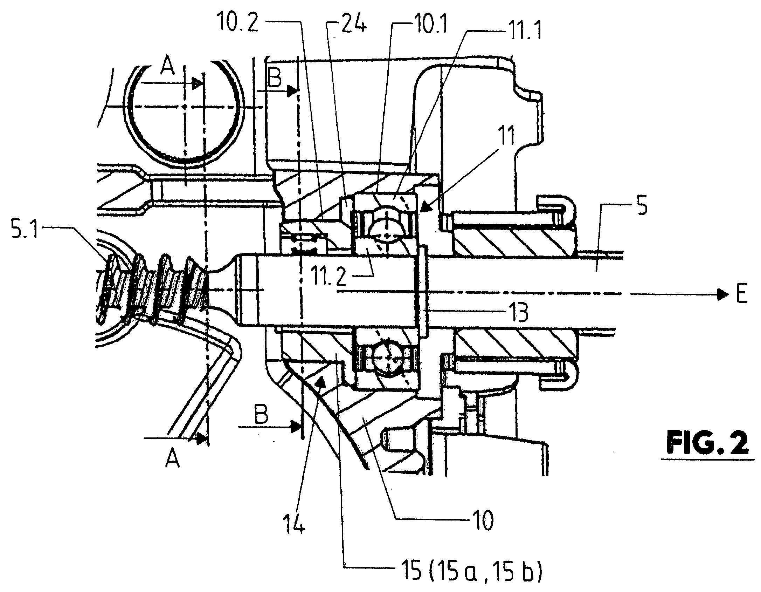

- Fig. 2: shows an enlarged sectional view of a part of the gearbox housing of the auxiliary drive of figure 1 in an axial clearance compensation device;

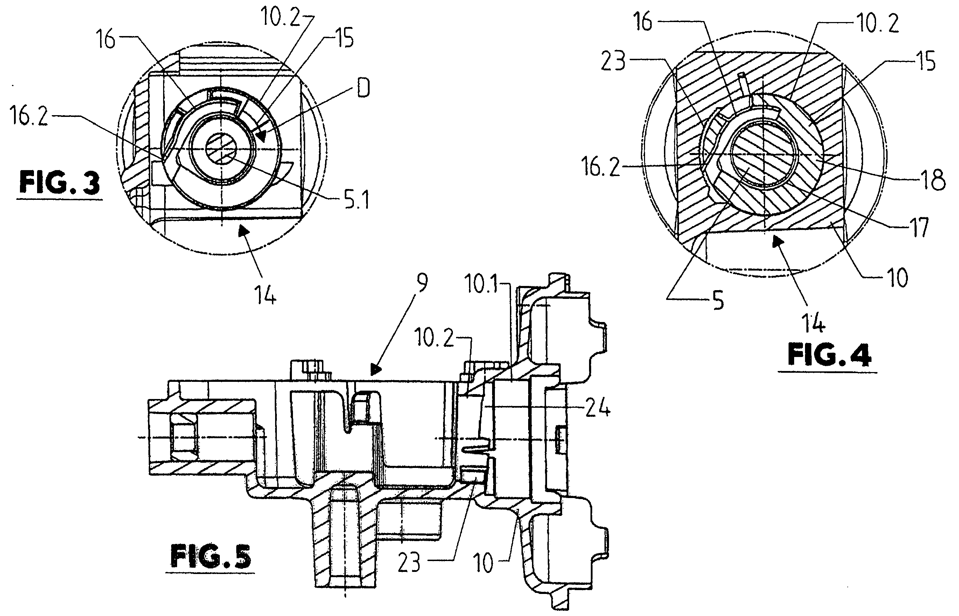

- Fig. 3 and 4: show sections corresponding to the lines A - A or B - B of figures 1 and 2;
- Fig. 5: shows in detail drawing a section through the gear housing and in a section along the line C - C of figures 1 and 2;
- Fig. 6 and 7: show an emerging part of the axial clearance compensation device in perspective view and in rear view as well as in front view;
- Fig. 8 and 9: show representations similar to the figures 6 and 7 in another modification of the invention;
- Fig. 10 and 11: show representations similar to the figures 6 and 7 in another embodiment.

In the figures, 1 is an electromotive auxiliary drive in the form of a wiper drive. In a manner known per se, the auxiliary drive consists of an electric motor 2 and a gearbox 3 designed as a worm gear. The electric motor 2 includes among other things, an armature shaft 5 arranged in a pan-shaped motor housing 4 with an armature stack 6 having an armature winding and a commutator 7. The armature shaft 5 is accommodated by a bearing 8 at the bottom of the pan-shaped motor housing 4 and extends from the interior of the motor housing 4 to the interior of the gearbox 3 or to the interior of an essentially shell-shaped gearbox 9. The latter forms a flange 10 at the transition to the electric motor 2. The cup-shaped motor housing 4 is flanged to this flange with its open side or attached in another appropriate way.

The bearings 11 and 12 are provided for the armature shaft 5 of the gearbox housing 9 in the area of the flange 10 and on the side of the gearbox housing 9 that is opposite to the flange 10. Between the bearings 11 and 12, the armature shaft is built in the form of a worm gear on section 5.1, which interacts with a non-illustrated gear or worm gear wheel, which is part of the gearbox 3 and is mounted on the revolving or swivelling output shaft of the gearbox 3 located on the bottom 9.1, which is not shown either in the figure.

In the illustrated embodiment, the bearings 8 and 11 are both designed as a ball bearing, with an outer bearing ring 8.1 or 11.1 and with an internal bearing ring 8.2 or 11.2 enclosing the armature shaft 5 and with ball and rolling bodies arranged between such bearing rings. Furthermore, both bearings 8 and 11 are designed such that, in addition to a radial bearing or support, they also provide axial support to the armature shaft 5 and therefore support themselves axially on the armature shaft 5, each on the inner bearing rings 8.2 and 11.2 facing each other, through an axial support element 13, in the form of a C clip that is held in a groove of the armature shaft 5 by locking. Bearing 12 is simply designed as a radial bearing.

The outer bearing ring 11.1 of the bearing 1 is arranged in a bearing bore 10.1 built in the area of the flange 10 and aligned with the cylindrical outer surface of the bearing ring 11.1. The outer bearing ring 8.1 is included in a bearing opening 4.1 of the motor housing 4 and is axially supported against the bottom of the bearing opening 4.1.

In bearing 11, which is axially arranged in the bearing opening 10.1, i.e. movable in the direction of the axis of the armature shaft 5, an axial clearance compensation device 14 is attached, which essentially consists of a circular starting-up part 15 and a leaf spring type holding spring 16, which is manufactured by pressing and bending from a sheet of spring metal, e.g. spring steel, and serves as a locking element for securing the alignment of the axial clearance compensation device 14 in the manner described in greater details here below.

The emerging part 15 essentially consists of a ring body 18 forming a ring opening 17. The ring body is provided with two open recesses or openings 19 and 20 on a front side 15.1 of the emerging part 15, which are so designed that the holding spring 16 set in the ring body 18 is in contact with a circular arc-shaped, curved spring section 16.1 against the inner surface of the ring body 18 and positively engages the ring body 18 in the opening 19 with the straps 16.1.1 on section 16.1. The holding spring 16 in the emerging part 15 or in the ring body 18 is thus held positively, in such a way that it protrudes with a section 16.2 acting as a catch through the opening 20 over the cylindrical periphery of the ring body 18 and at an angle to the cylindrical periphery of the ring body 18.

On the other front side 15.2, the emerging part 15 is provided with a flange 21 projected over the outer surface of the ring body 18, which is attached on the side thereof facing the ring body 18 with an angular face 22 forming a thread, and in such a way that the axial distance from the angular face 22 to the front side 15.2 steadily increases in an assumed direction of rotation (arrow D) of the emerging part 15.

In the assembled state, the emerging part 14 is set in the bearing opening 10.1, in such a way that the front side 15.1 is facing the interior of the bearing housing 9 and the section of the emerging part having the flange 21 is accommodated in the bearing opening 10.1 and the part of the starting-up part 15 not having this flange is included in an opening 10.2 which connects the interior of the bearing housing 9 to the bearing opening 10.1 and is designed annularly adjusted to the cylindrical outer diameter of the ring body 18. The surface bounding the opening 10.2 is provided with a screening 23, which consists of a variety of projections, each extending parallel to the axis of this opening and intervening depressions. The end of section 16.2 of the holding spring 16 that projects against the arrow D and acts as a catch on the outer surface of the ring body 18, resiliently engages in this detent in such a way that the starting-up part 15 can only be rotated in the direction indicated by the arrow D, in which the axial distance between the angular face 22 and the front face 15.2 increases, the holding spring 16 interacting with the screening 23 prevents rotation in the opposite direction.

At the transition between the bearing opening 10.1 and the opening 10.2, which has a reduced inner cross-section as compared to the bearing opening 10.1, a locating face or an angular face 24 is formed, which is designed complementary to the angular face 22 and against which the angular face 22 lies, so that, on turning the starting-up part 15 over the common axis of the openings 10.1 and 10.2, the starting-up part 15 moves axially to this axis, in the direction of the motor housing 4.

In the mounted state, the armature shaft 5 is passed through the ring opening 17 of the starting-up part 15 with sufficiently large play or distance and is arranged coaxially with the axis of such ring opening 17 and also coaxially with the axis of the bearing opening 10.1 and the other opening 10.2. The starting-up part 15 comes into contact with the front side 15.2 thereof or with a local ring-like projection, which protrudes on the edge of the front side 15.2, only with the external bearing ring 11.1 of the bearing 11 accommodated in the bearing opening 10.1.

After mounting the motor housing 4 on the gearbox housing 9, the armature shaft 5 and the associated bearings 8, 11 and 12, by turning or tilting the starting-up part 15 about the axis of the armature shaft 5 with wedging or screwing effect, an axial displacement of the bearing 11 can be produced within the bearing opening 10.1 and hence also an axial movement of the armature shaft 5 towards the bottom of the motor housing or in the direction of the bearing 8, as indicated by the arrow E, to eliminate a possible side play of the armature shaft 3. The rotation of the starting-up-part 15 is carried out with an open gearbox housing 9 by means of a suitable tool, which is introduced from the inside of the gearbox 9 to the opening 10.2 and attaches to the starting-up part 15 in the front side 15.1. For this purpose, the starting-up part 15 is built on the front side 15.1 with an axial plug-shaped projection 25 projecting away from the front side. The starting-up part 15 is prevented from turning from the axial clearance compensation position by the holding spring 16.1 interacting with the detent 23, i.e. the respective setting is secured by the holding spring 16 acting with the detent 23.

The special feature of the axial clearance compensation device 14 is inter alia, the fact that this setting allows a reliable compensation of the axial clearance of the armature shaft 5 with reduced size and reduced design volume, simplified design and simplified installation. The starting-up part 15 can easily be installed during the manufacturing. The setting parameters (torque and angle of the setting) can be monitored for any auxiliary drive during the production, resulting in substantial advantages for the production quality. The respective setting is secured by the holding spring 16 interacting with the screening 23. In particular, if the holding spring 16 is formed with sharp points on the section 16.1 facing away from the marginal area of the section 16.2, it is also possible to dispense with the screening 23 and ensure that the starting-up part 15's setting is secured due to the fact that the holding spring 16 digs into the material of the gearbox housing 9 with the marginal area projecting over the periphery of the ring body 18.

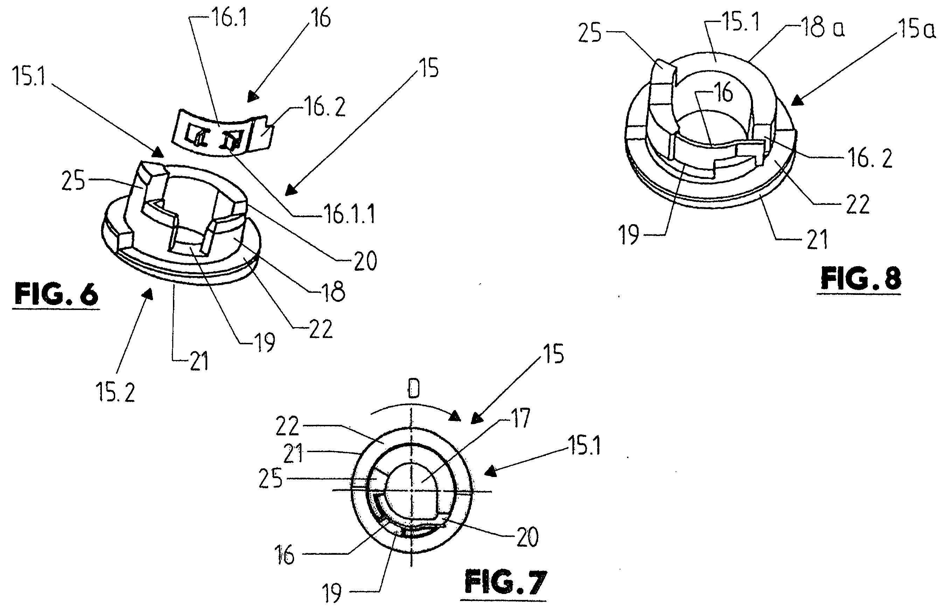

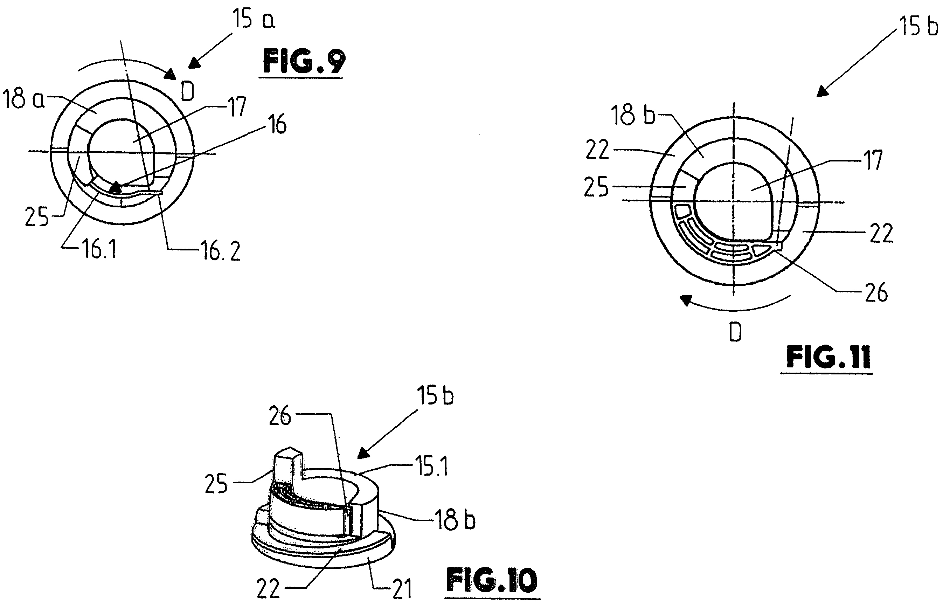

Figures 8 and 9 show another embodiment, a starting-up part 15a, which essentially differs from the starting-up part 15 only in that the holding spring 16 manufactured as a metal spring from a suitable metallic spring material, for example from spring steel sheet, is held by the partial encapsulation of the ring body 18a corresponding to the ring body 18, and in the form that the holding spring 16 with its section 16.2 obliquely projects through the opening 20 over the circular periphery of the ring body 18a and in the opposite direction of the axial clearance compensation (arrow D).

Figures 10 and 11 show another embodiment, a starting-up part 15b, which is different from the starting-up part 15 and 15a in that, the mating catch interacting with the screening 23 is not made of metal holding spring 16, but from a catch element 26 projecting over the cylindrical periphery of the ring body 18b, which is formed as a single piece with the starting-up part 15b or with a resilient portion of the ring body 18b.

The invention has been described above with embodiments. It is understood that numerous changes and modifications are possible, without affecting the object of the invention underlying the invention.

### Reference symbol list

- 1: Auxiliary drive
- 2: Electric motor
- 3: Gearbox
- 4: Motor housing
- 4.1: Bearing opening in the motor housing
- 5: Armature shaft
- 6: Armature stack with armature winding
- 7: Commutator
- 8: Bearing
- 8.1, 8.2: Bearing ring
- 9: Gearbox housing
- 9.1: Gearbox housing bottom
- 10: Flange
- 10.1: Bearing opening for receiving the bearing 11
- 10.2: Additional opening
- 11: Bearing
- 11.1, 11.2: Bearing ring
- 12: Bearing
- 13: Axial support element or C clip
- 14: Axial clearance compensation device
- 15, 15a, 15b: Starting-up part
- 15.1, 15.2: Front side of the starting-up part 15
- 16: Holding spring
- 16.1, 16.2: Section of the holding spring 16
- 16.1.1: Mounting strap
- 17: Ring opening of the starting-up part 15, 15a, 15b
- 18, 18a, 18b: Ring body
- 19, 20: Opening
- 21: Flange
- 22: Angular face
- 23: Detent
- 24: Contact or angular face on the gearbox housing 9
- 25: Projection
- 26: integral catch element of the starting-up part 15b

- A - A, B - B, C - C: Section plane
- D: Rotating direction of the starting-up part 15, 15a, 15b to compensate for the axial clearance
- E: axial displacement of the armature shaft 5 to compensate for the axial clearance

## Claims

1. An electromotive auxiliary drive for vehicles with at least one rotating shaft (9) mounted in a housing (4, 9), with an axial clearance compensation device (14) with at least one starting-up part (15, 15a, 15b), which is in contact with at least one contact surface (22) against at least one housing side mating surface (24) and which can revolve or swivel about the axis of the shaft (5) or about a swivel axis that is parallel to the axis of the shaft (5) for an axial movement in a position compensating the axial clearance, wherein the contact surface (22) and/or the housing side mating surface (24) is designed as inclined against the shaft (5) and as an angular or threaded surface at least partially encircling the axis of the shaft (5), the starting-up part (15, 15a, 15b) has a locking means (16, 23, 26), which keep the starting-up part (15, 15a, 15b) in the axial clearance compensating position **characterized in that** the starting-up part (15, 15a, 15b) is provided with a projecting catch (16.2, 26) on the periphery of the starting-up part, which forms the locking means in combination with a face on the housing (4, 9), the locking means is designed in such a way that it enables the revolving and swivelling of the starting-up part (15, 15a) about the swivel axis in the axial clearance compensating position, and it prevents the revolving or swivelling of the starting-up part (15, 15a) in the opposite direction.

2. An electromotive auxiliary drive according to claim 1, **characterized by** the fact that the starting-up part (15, 15a) acts on the shaft (5) through a bearing (11).

3. An electromotive auxiliary drive according to claim 2, **characterized by** the fact that the bearing (11) is a bearing retaining the shaft (5) in the housing (4, 9).

4. An auxiliary drive according to claim 2 or 3, **characterized by** the fact that the bearing (11) interacting with the starting-up part (15, 15a, 15b) is a roller or a ball bearing with at least two bearing rings (11.1, 11.2), of which one bearing ring (11.2) is axially secured on the shaft (5) and that the starting-up part (15, 15a, 15b) acts on the other bearing part (11.1).

5. An auxiliary drive according to one of the preceding claims, **characterized by** the fact that the starting-up part (15, 15a, 15b) is formed enclosing the shaft (5) like a sleeve or ring, and on the radially oriented surface with respect to the axis of the starting-up part (15, 15a, 15b), for example, on a side face or on the face of the remaining ring body (18) of a projecting flange (21) that has at least one contact surface (22).

6. An auxiliary drive according to one of the preceding claim, wherein at least one catch is provided on one section (16.2, 26), preferably on a resilient section (16.2, 26), which projects away from the rotating or swivelling direction (D) effecting the axial clearance compensation of the starting-up part (15, 15a, 15b) diagonally across the outer surface, preferably at an angle across the outer surface of the starting-up part (15, 15a, 15b) enclosing the shaft (5) in a ring or a cylindrical shape.

7. An auxiliary drive according to one of the preceding claim, **characterized by** the fact that the catch is formed by a metal holding spring (16), preferably made from a spring steel sheet.

8. An auxiliary drive according to claim 7, **characterized by** the fact that at least one holding spring (16) is secured by inserting and/or moulding at the starting-up part (15, 15a).

9. An auxiliary drive according to one of the preceding claims, **characterized by** the fact that at least the single catch (26) is manufactured integrally with the starting-up part (15b) or a resilient section (18b.1) of the starting-up part (15b).

10. An auxiliary drive according to one of the preceding claims, **characterized by** the fact that the starting-up part (15, 15a, 15b) is a part made of metal or plastic.

11. An auxiliary drive according to one of the preceding claims, **characterized by** the fact that at least one contact surface (22) as well as at least one mating surface (24) are designed as angular faces or helicoids.

12. An auxiliary drive according to one of the preceding claims 2 to 11, **characterized by** the fact that the bearing (11) interacting with the starting-up part (15) is designed to move axially on the housing (4, 5).

13. An auxiliary drive according to one of the preceding claims 2 to 12, **characterized by** the fact that the shaft (5) is supported by another bearing or bearing (8) against the axial movement (E) or force generated by at least one starting-up part (15, 15a, 15b).

14. An auxiliary drive according to one of the preceding claims, **characterized by** the fact that the shaft (5) is the armature shaft of an electric motor (2) or an extension of such armature shaft, and that the armature shaft (5) or the extension thereof extends into the housing (9) of a gearbox (3) connected with the motor (2).

15. An auxiliary drive according to claim 2 to 14, **characterized by** the fact that the axial clearance compensation device (14) or at least one starting-up part (15, 15a, 15b) as well as the bearing (11) interacting with this starting-up part are arranged at the transition between the electric motor (2) and the gearbox (3) in the motor housing (4) or in the gearbox housing (9).

## Patentansprüche

1. Elektromotorischer Hilfsantrieb für Kraftfahrzeuge mit mindestens einer drehenden Welle (9), die in einem Gehäuse (4, 9) montiert ist, mit einer Axialspielkompensationsvorrichtung (14) mit mindestens einem Anlaufteil (15, 15a, 15b), das mit mindestens einer Anlagefläche (22) an mindestens einer gehäuseseitigen Gegenfläche (24) in Kontakt ist, und welches um die Achse der Welle (5) oder um eine Schwenkachse, die parallel zu der Achse der Welle (5) für eine Axialbewegung in eine Position verläuft, welche das Axialspiel kompensiert, gedreht oder darum verschwenkt werden kann, wobei die Anlagefläche (22) und/oder die gehäuseseitige Gegenfläche (24) so ausgelegt ist, dass sie zu der Welle (5) geneigt ist und als eine abgewinkelte oder eine mit Gewinde versehene Oberfläche mindestens teilweise die Achse der Welle (5) umgibt, wobei das Anlaufteil (15, 15a, 15b) ein Sperrmittel (16, 23, 26) aufweist, welches das Anlaufteil (15, 15a, 15b) in der Axialspielkompensationsstellung halten, **dadurch gekennzeichnet, dass** an dem Anlaufteil (15, 15a, 15b) ein vorspringender Mitnehmer (16.2, 26) an dem Umfang des Anlaufteils zur Verfügung gestellt ist, welcher das Sperrmittel in Kombination mit einer Seite des Gehäuses (4, 9) bildet, das Sperrmittel dergestalt ausgestaltet ist, dass es das Drehen und Schwenken des Anlaufteils (15, 15a) um die Schwenkachse in der Axialspielkompensationsstellung ermöglicht und es das Drehen oder Schwenken des Anlaufteils (15, 15a) in die entgegengesetzte Richtung verhindert.

2. Elektromotorischer Hilfsantrieb nach Anspruch 1, **gekennzeichnet durch** die Tatsache, dass das Anlaufteil (15, 15a) **durch** ein Lager (11) hindurch auf die Welle (5) einwirkt.

3. Elektromotorischer Hilfsantrieb nach Anspruch 2, **gekennzeichnet durch** die Tatsache, dass das Lager (11) ein Lager ist, das die Welle (5) in dem Gehäuse (4, 9) zurückhält.

4. Hilfsantrieb nach Anspruch 2 oder 3, **gekennzeichnet durch** die Tatsache, dass das Lager (11), das mit dem Anlaufteil (15, 15a, 15b) zusammenwirkt, eine Rolle oder ein Kugellager mit mindestens zwei Lagerringen (11.1, 11.2) ist, von denen ein Lagerring (11.2) axial an der Welle (5) sicher befestigt ist, und dass das Anlaufteil (15, 15a, 15b) auf das andere Lagerteil (11.1) einwirkt.

5. Hilfsantrieb nach einem der vorhergehenden Ansprüche, **gekennzeichnet durch** die Tatsache, dass das Anlaufteil (15, 15a, 15b) wie eine Manschette oder ein Ring die Welle (5) umschließend und auf der radial ausgerichteten Oberfläche im Verhältnis zu der Achse des Anlaufteils (15, 15a, 15b), zum Beispiel auf einer Seitenfläche oder auf der Seite des verbleibenden Ringkörpers (18) eines vorspringenden Flansches (21), der mindestens eine Anlagefläche (22) aufweist, ausgebildet ist.

6. Hilfsantrieb nach einem der vorhergehenden Ansprüche, wobei mindestens ein Mitnehmer an einem Abschnitt (16.2, 26), vorzugsweise an einem nachgiebigen Abschnitt (16.2, 26), der sich von der Dreh- oder Schwenkrichtung (D) weg erstreckt, zur Verfügung gestellt ist, wodurch die Axialspielkompensation des Anlaufteils (15, 15a, 15b) diagonal über die Außenfläche, vorzugsweise unter einem Winkel über die Außenfläche des Anlaufteils (15, 15a, 15b) erfolgt, das die Welle (5) in einer Ringform oder zylindrischen Form umschließt.

7. Hilfsantrieb nach einem der vorhergehenden Ansprüche, **gekennzeichnet durch** die Tatsache, dass der Mitnehmer **durch** eine metallene Rückhaltefeder (16) ausgebildet ist, die vorzugsweise aus einem Federstahlblech hergestellt ist.

8. Hilfsantrieb nach Anspruch 7, **gekennzeichnet durch** die Tatsache, dass die mindestens eine Rückhaltefeder (16) **durch** Einsetzen und/oder Umspritzen sicher an dem Anlaufteil (15, 15a) befestigt ist.

9. Hilfsantrieb nach einem der vorhergehenden Ansprüche, **gekennzeichnet durch** die Tatsache, dass mindestens der einzelne Mitnehmer (26) einstückig mit dem Anlaufteil (15b) oder einem nachgiebigen Abschnitt (18b.1) des Anlaufteils (15b) hergestellt ist.

10. Hilfsantrieb nach einem der vorhergehenden Ansprüche, **gekennzeichnet durch** die Tatsache, dass das Anlaufteil (15, 15a, 15b) ein Teil ist, das aus Metall oder Kunststoff hergestellt ist.

11. Hilfsantrieb nach einem der vorhergehenden Ansprüche, **gekennzeichnet durch** die Tatsache, dass mindestens eine Anlagefläche (22) sowie auch mindestens eine Gegenfläche (24) als abgewinkelte Flächen oder als Schraubenflächen ausgestaltet sind.

12. Hilfsantrieb nach einem der vorhergehenden Ansprüche 2 bis 11, **gekennzeichnet durch** die Tatsache, dass das Lager (11), das mit dem Anlaufteil (15) zusammenwirkt, dazu ausgestaltet ist, sich axial an dem Gehäuse (4, 5) zu bewegen.

13. Hilfsantrieb nach einem der vorhergehenden Ansprüche 2 bis 12, **gekennzeichnet durch** die Tatsache, dass die Welle (5) **durch** ein anderes Lager oder das Lager (8) gegen die Axialbewegung (E) oder die Kraft gelagert wird, die **durch** mindestens ein Anlaufteil (15, 15a, 15b) erzeugt wird.

14. Hilfsantrieb nach einem der vorhergehenden Ansprüche, **gekennzeichnet durch** die Tatsache, dass die Welle (5) die Ankerwelle eines elektrischen Motors (2) oder eine Verlängerung von solch einer Ankerwelle ist, und dass sich die Ankerwelle (5) oder die Verlängerung davon in das Gehäuse (9) eines Getriebes (3) erstreckt, das mit dem Motor (2) verbunden ist.

15. Hilfsantrieb nach Anspruch 2 bis 14, **gekennzeichnet durch** die Tatsache, dass die Axialspielkompensationsvorrichtung (14) oder mindestens ein Anlaufteil (15, 15a, 15b) sowie auch das Lager (11), das mit diesem Anlaufteil zusammenwirkt, an dem Übergang zwischen dem elektrischen Motor (2) und dem Getriebe (3) in dem Motorgehäuse (4) oder in dem Getriebegehäuse (9) angeordnet sind.

## Revendications

1. Entraînement auxiliaire électromoteur pour véhicules ayant au moins un arbre rotatif (9) monté dans un logement (4, 9), avec un dispositif (14) de rattrapage de jeu axial avec au moins une pièce (15, 15a, 15b) de mise en marche, qui est en contact avec au moins une surface de contact (22) contre au moins une surface d'ajustement (24) latérale du logement et qui peut tourner ou pivoter autour de l'axe de l'arbre (5) ou autour d'un axe de pivotement qui est parallèle à l'axe de l'arbre (5) pour se déplacer axialement dans une position rattrapant le jeu axial, dans lequel la surface de contact (22) et/ou la surface d'ajustement (24) latérale du logement est conçue avec une inclinaison contre l'arbre (5) et comme une surface angulaire ou filetée entourant au moins en partie l'axe de l'arbre (5), la pièce (15, 15a, 15b) de mise en marche comporte un moyen de verrouillage (16, 23, 26), qui maintient la pièce (15, 15a, 15b) de mise en marche dans la position rattrapant le jeu axial,
**caractérisé en ce que** la pièce (15, 15a, 15b) de mise en marche est pourvue d'un doigt d'entraînement (16.2, 26) en saillie sur la périphérie de la pièce de mise en route, qui constitue le moyen de verrouillage en combinaison avec une face sur le logement (4, 9), le moyen de verrouillage est conçu de telle façon qu'il permet la rotation et le pivotement de la pièce (15, 15a) de mise en marche autour de l'axe de pivotement dans la position rattrapant le jeu axial et il empêche la pièce (15, 15a) de mise en marche de tourner ou pivoter dans le sens contraire.

2. Entraînement auxiliaire électromoteur selon la revendication 1, **caractérisé en ce que** la pièce (15, 15a) de mise en marche agit sur l'arbre (5) par l'intermédiaire d'un roulement (11).

3. Entraînement auxiliaire électromoteur selon la revendication 2, **caractérisé en ce que** le roulement (11) est un roulement qui retient l'arbre (5) dans le logement (4, 9).

4. Entraînement auxiliaire électromoteur selon la revendication 2 ou 3, **caractérisé en ce que** le roulement (11) qui interagit avec la pièce (15, 15a, 15b) de mise en marche est un roulement à rouleaux ou à billes ayant au moins deux bagues (11.1, 11.2) de roulement, dont l'une (11.2) est solidement fixée axialement sur l'arbre (5), et que la pièce (15, 15a, 15b) de mise en marche agit sur l'autre bague (11.1).

5. Entraînement auxiliaire électromoteur selon l'une quelconque des revendications précédentes, **caractérisé en ce que** la pièce (15, 15a, 15b) de mise en marche est constituée en entourant l'arbre (5) comme un manchon ou un anneau et sur la surface orientée radialement par rapport à l'axe de la pièce (15, 15a, 15b) de mise en marche, par exemple, sur une face latérale ou sur la face du corps (18) de bague restant d'une bride (21) en saillie qui comporte au moins une surface de contact (22).

6. Entraînement auxiliaire selon l'une quelconque des revendications précédentes, dans lequel au moins un doigt d'entraînement est disposé sur une section (16.2, 26), de préférence sur une section (16.2, 26) élastique, qui saille en s'éloignant de la direction (D) de rotation ou de pivotement en effectuant le rattrapage de jeu axial de la pièce (15, 15a, 15b) de mise en marche en diagonale d'un côté à l'autre de la surface extérieure, de préférence en faisant un angle d'un côté à l'autre de la surface extérieure, de la pièce (15, 15a, 15b) de mise en marche entourant l'arbre (5) par sa forme annulaire ou cylindrique.

7. Entraînement auxiliaire selon l'une quelconque des revendications précédentes, **caractérisé en ce que** le doigt d'entraînement est constitué par un ressort de retenue (16) métallique, fait de préférence à partir de tôle d'acier à ressort.

8. Entraînement auxiliaire selon la revendication 7, **caractérisé en ce qu'**on fixe solidement au moins un ressort de retenue (16) en l'insérant et/ou le moulant au niveau de la pièce (15, 15a) de mise en marche.

9. Entraînement auxiliaire selon l'une quelconque des revendications précédentes, **caractérisé en ce qu'**au moins l'unique doigt d'entraînement (26) est fabriqué d'une seule pièce avec la pièce (15b) de mise en marche ou une section (18b.1) élastique de la pièce (15b) de mise en marche.

10. Entraînement auxiliaire selon l'une quelconque des revendications précédentes, **caractérisé en ce que** la pièce (15, 15a, 15b) de mise en marche est une pièce faite en métal ou en plastique.

11. Entraînement auxiliaire selon l'une quelconque des revendications précédentes, **caractérisé en ce qu'**au moins une surface de contact (22) ainsi qu'au moins surface d'ajustement (24) sont conçues comme des faces angulaires ou des hélicoïdes.

12. Entraînement auxiliaire selon l'une quelconque des revendications 2 à 11, **caractérisé en ce que** le roulement (11) qui interagit avec la pièce (15) de mise en marche est conçu pour se déplacer axialement sur le logement (4, 5).

13. Entraînement auxiliaire selon l'une quelconque des revendications 2 à 12, **caractérisé en ce que** l'arbre (5) est soutenu par un autre roulement ou roulement (8) contre le mouvement axial (E) ou la force engendrée par au moins une pièce (15, 15a, 15b) de mise en marche.

14. Entraînement auxiliaire selon l'une quelconque des revendications précédentes, **caractérisé en ce que** l'arbre (5) est l'arbre du rotor d'un moteur électrique (2) ou le prolongement d'un tel arbre de rotor et que l'arbre (5) de rotor ou le prolongement de celui-ci pénètre dans le carter (9) d'une boîte de vitesses (3) raccordée au moteur (2).

15. Entraînement auxiliaire selon l'une quelconque des revendications 2 à 14, **caractérisé en ce que** dispositif (14) de rattrapage de jeu axial ou au moins une pièce (15, 15a, 15b) de mise en marche ainsi que le roulement (11) qui interagit avec cette pièce de mise en marche sont disposées à la transition entre le moteur électrique (2) et la boîte de vitesses (3) dans le logement (4) du moteur ou dans le carter (9) de la boîte de vitesses.
